# EUROPÄISCHE PATENTSCHRIFT

(11) **EP 1 360 411 B1**
(45) Veröffentlichungstag und Bekanntmachung des Hinweises auf die Patenterteilung: **23.08.2006**
(21) Anmeldenummer: 02706649.7
(22) Anmeldetag: 29.01.2002
(51) Int. Cl.: F02N 11/04, F02N 11/08, H02J 7/14

(54) **SCHALTUNGSANORDNUNG FÜR EINEN GENERATOR, INSBESONDERE EINEN INTEGRIERTEN STARTER-GENERATOR**
CIRCUIT ARRANGEMENT FOR A GENERATOR, ESPECIALLY AN INTEGRATED STARTER GENERATOR
ENSEMBLE CIRCUIT POUR UN GENERATEUR, NOTAMMENT POUR UN GENERATEUR-DEMARREUR INTEGRE

(30) Priorität: 13.02.2001 DE 10106622
(43) Veröffentlichungstag der Anmeldung: 12.11.2003
(73) Patentinhaber: SIEMENS AKTIENGESELLSCHAFT, 80333 München (DE)
(72) Erfinder: JOHANNING, Hans-Peter, 61449 Steinbach (DE)
(86) Internationale Anmeldenummer: PCT/DE2002/000316
(87) Internationale Veröffentlichungsnummer: WO 2002/064971

(56) Entgegenhaltungen:
- DE-A- 19 646 043
- US-A- 5 694 311
- KRAPPEL ET AL.: "KURBELWELLENSTARTGENERATOR (KSG) - BASIS FUER ZUKUENFTIGE FAHRZEUGKONZEPTE" 2000 , EXPERT VERLAG , RENNINGEN, MALMSHEIM , DE XP002200707 in der Anmeldung erwähnt Seite 24 -Seite 29

## Beschreibung

Die Erfindung betrifft eine Schaltungsanordnung für einen Generator. Als Schaltungsanordnung wird dabei eine Schaltung bezeichnet, die in Form einer oder mehrerer baulich getrennter Einheiten realisiert ist.

Ein Generator kann als Starter-Generators ausgeführt. Ein Starter-Generator wird als Teil eines Bordnetzes in einem Kraftfahrzeug eingesetzt und erfüllt zwei Funktionen. Zum einen kann der Starter-Generator als Generator arbeiten und eine Fahrzeugbatterie laden oder ein Verbrauchersystem im Kraftfahrzeug speisen. Dabei wandelt der Starter-Generator mechanische Energie in elektrische Energie um. Zum anderen dient der Starter-Generator als Starter für eine Verbrennungsmaschine des Kraftfahrzeugs und wird dabei von der Fahrzeugbatterie gespeist.

In A. Krappel et al. "Kurbelwellenstartgenerator (KSG) - Basis für zukünftige Fahrzeugkonzepte", 2. erweiterte Auflage, Expert-Verlag, Seiten 24 bis 29, ist ein solcher Starter-Generator beschrieben. Der Starter-Generator weist eine erste Batterie mit einer Leerlaufspannung von 36 Volt und eine zweite Batterie mit einer Leerlaufspannung von 12 Volt auf. Die erste Batterie speist ein Hochlast-Verbrauchersystem, wenn der Starter-Generator den Energiebedarf des Hochlast-Verbrauchersystems nicht decken kann. Dies ist z.B. der Fall, wenn die Asynchronmaschine nicht in Betrieb ist oder wenn sich der Starter-Generator im Starterbetrieb befindet. Dazu weist der Starter-Generator einen Anschluss auf, über den das Hochlast-Verbrauchersystem parallel zur ersten Batterie schaltbar ist. Das Entsprechende gilt für die zweite Batterie und ein Kleinlast-Verbrauchersystem.

Die erste Batterie ist parallel zu einem Kondensator und parallel zu dem DC-seitigen Eingang eines DC/AC-Wandlers geschaltet. Der AC-seitige Eingang des DC/AC-Wandlers ist mit einer Asynchronmaschine verbunden. Die Asynchronmaschine wandelt elektrische Energie in mechanische Energie um und umgekehrt. Erzeugt die Asynchronmaschine mehr Energie als das Hochlast-Verbrauchersystem verbraucht, lädt die Asynchronmaschine die erste Batterie über den DC/AC-Wandler auf und versorgt das Hochlast-Verbrauchersystem mit elektrischer Energie. Entsprechendes gilt für die zweite Batterie und das Kleinlast-Verbrauchersystem.

Damit die zweite Batterie durch die hohe Spannung, die dabei am DC-seitigen Eingang des DC/AC-Wandlers anliegt und in der Regel ca. 42 Volt beträgt, nicht zerstört wird, ist die zweite Batterie parallel zu einem ersten Eingang eines DC/DC-Wandlers geschaltet. Der zweite Eingang des DC/DC-Wandlers ist parallel zum DC-seitigen Eingang des DC/AC-Wandlers geschaltet. Der DC/DC-Wandler wandelt die hohe Spannung am zweiten Eingang in eine niedrigere Spannung, z. B. 14 Volt, am ersten Eingang um, so dass die zweite Batterie geladen werden kann ohne zerstört zu werden. Darüber hinaus kann dadurch das Kleinlast-Verbrauchersystem mit der niedrigen Spannung durch den Asynchronmotor versorgt werden.

Im Starterbetrieb versorgt die erste Batterie den DC/AC-Wandler mit Energie. Die zweite Batterie kann dabei die erste Batterie unterstützen. Dazu wandelt der DC/DC-Wandler die niedrige Spannung am ersten Eingang in eine hohe Spannung am zweiten Eingang des DC/DC-Wandlers um. Eine Steuereinheit steuert den DC/DC-Wandler und den DC/AC-Wandler.

Es wird angestrebt, die Leistungsgrenze des Asynchronmotors zu erhöhen, da der Leistungsbedarf der Verbrauchersysteme in Kraftfahrzeugen in Zukunft immer größer wird. Darüber hinaus ist eine möglichst hohe Leistungsgrenze wünschenswert, weil bei hohen Drehzahlen des Verbrennungsmotors die maximal abgebbare Leistung des Asynchronmotors im Generatorbetrieb sinkt. Die Leistungsgrenze des Asynchronmotors wird bestimmt durch die Spannung am DC-seitigen Eingang des DC/AC-Wandlers. Je höher die Spannung am DC-seitigen Eingang des DC/AC-Wandlers sein darf, um so höher ist die Leistungsgrenze des Asynchronmotors. Die Spannung am DC-seitigen Eingang des DC/AC-Wandlers darf jedoch nie so hoch sein, dass die erste Batterie zerstört oder geschädigt wird. Beträgt die Leerlaufspannung der ersten Batterie beispielsweise 36 Volt, so darf die Spannung am DC-seitigen Eingang des DC/AC-Wandlers nicht längere Zeit über etwa 42 Volt betragen. Diese zulässige Maximalspannung ist abhängig vom Typ und von der Temperatur der ersten Batterie. Da die Leerlaufspannung der ersten Batterie die zulässige Maximalspannung mit bestimmt, begrenzt die Leerlaufspannung der ersten Batterie die durch den Asynchronmotor erzeugbare Leistung.

Die Leerlaufspannung der ersten Batterie ist durch Standardisierung auf 36 Volt festgelegt. Um Kompatibilität zum Standard zu gewährleisten, ist eine Erhöhung der Leerlaufspannung der ersten Batterie und somit der Spannung am DC-seitigen Eingang des DC/AC-Wandlers, um damit die Leistungsgrenze des Asynchronmotors zu erhöhen, nicht möglich.

Das Problem der begrenzten maximal abgebbaren Leistung des Asynchronmotors besteht auch bei einem Generator, der nicht als Starter-Generator sondern als einfache Lichtmaschine ausgeführt ist.

In der DE 196 46 043 Al wird eine Vorrichtung zur Spannungsversorgung mit einer als Generator oder als Starter betreibbaren elektrischen Maschine vorgeschlagen, die im Generatorbetrieb von der Brennkraftmaschine angetrieben wird und im Startbetrieb die Brennkraftmaschine auf die erforderliche Mindestdrehzahl bringt. Die elektrische Maschine ist über einen Umrichter mit einem Spannungswandler verbunden, der an die Bordnetzbatterie angeschlossen ist. Im Startfall wird der Spannungswandler mittels eines Schaltelementes überbrückt, so dass der Starter direkt aus der Batterie versorgt wird. Im Generatorbetrieb wird das Schaltelement geöffnet, so dass der Generator mit gegenüber Bordnetzspannung erhöhter Spannung betreibbar ist und diese Spannung im Spannungswandler auf Bordnetzspannung gewandelt wird.

Der Erfindung liegt die Aufgabe zugrunde, eine Schaltungsanordnung für einen Generator anzugeben, durch die der Generator im Vergleich zum Stand der Technik eine höhere Leistungsgrenze aufweisen kann und zugleich kompatibel zum Standard ist.

Die Aufgabe wird gelöst durch eine Schaltungsanordnung gemäß Anspruch 1.

Das Bauelement ermöglicht die Entkopplung der Spannung am DC-seitigen Eingang des DC/AC-Wandlers von der Spannung an der ersten Batterie. Dadurch kann am DC-seitigen Eingang des DC/AC-Wandlers eine für eine hohe Leistungsgrenze des Energiewandlers ausreichend hohe Spannung anliegen, ohne dass die erste Batterie zerstört wird. Zugleich kann die Leerlaufspannung der ersten Batterie weiterhin 36 Volt betragen, so dass Kompatibilität zum 42-Volt-Bordnetz-Standard gewährleistet ist.

Im Starterbetrieb steuert die Steuereinheit das Bauelement derart an, dass der Spannungsabfall zwischen den Leistungsanschlüssen des Bauelements möglichst gering ist. Dadurch wird die Leerlaufspannung der ersten Batterie optimal zum Versorgen des Verbrauchersystems ausgenützt.

Im Generatorbetrieb steuert die Steuereinheit den DC/AC-Wandler derart an, dass sich die Spannung an beiden Eingängen des DC/AC-Wandlers erhöht, wenn der Energiewandler aufgrund eines z.B. zu hohen Leistungsbedarfs des Verbrauchersystems seine Leistungsgrenze erreicht. Dadurch wird die Leistungsgrenze erhöht, so dass das Verbrauchersystem durch den Energiewandler wieder ausreichend versorgt werden kann. Damit die erste Batterie durch die Spannungserhöhung nicht beschädigt oder zerstört wird, steuert die Steuereinheit zugleich das Bauelement so an, dass ein für den Schutz der ersten Batterie ausreichender Spannungsabfall am Bauelement entsteht. Dadurch wird die Spannung, mit der die erste Batterie aufgeladen wird, auf sichere und geeignete Werte erniedrigt.

Da die erste Batterie und das Bauelement eine Reihenschaltung bilden, die parallel zum Verbrauchersystem geschaltet ist, ist die Verlustleistung des Bauelements proportional zum Spannungsabfall am Bauelement und zum Strom durch das Bauelement. Der Strom durch das Bauelement ist verhältnismäßig gering, denn der größte Teil des Stroms aus dem DC/AC-Wandler wird durch das Verbrauchersystem und nicht durch die Reihenschaltung aus erster Batterie und Bauelement geleitet. Folglich ist die Verlustleitung am Bauelement gering.

Das Bauelement weist aufgrund seiner genau zwei Leistungsanschlüssen keinen internen Energiespeicher auf. Es handelt sich also um ein einfaches und kostengünstiges Element. Der variable Spannungsabfall am Bauelement wird erzielt durch einen variablen elektrischen Widerstand. Beispielsweise handelt es sich beim Bauelement um einen Transistor, der Strom in beide Richtungen durchlässt, z.B. einen MOSFET-Transistor, dessen Gateelektrode mit der Steuereinheit verbunden ist.

Das Bauelement kann eine Parallelschaltung aus einem Transistor oder einem festen Widerstand und einem Relais aufweisen. Im Starterbetrieb hat dies den Vorteil, dass der Restwiderstand des vollständig geöffneten Transistors bzw. der Widerstand durch das Relais kurzgeschlossen werden kann, wodurch die Leerlaufspannung der ersten Batterie optimal für das Verbrauchersystem und zum Aufladen des Kondensators ausgenützt werden kann. Dazu ist das Relais mit der Steuereinheit verbunden.

Das Bauelement kann eine Parallelschaltung mehrerer Transistoren aufweisen.

Vorzugsweise weist das Bauelement eine Schutz- und Anpassungsschaltung auf, die vor die Gateelektrode des Transistors geschaltet ist und das Bauelement vor zu hohen Spannungen und Strömen schützt.

Die Spannung am DC-seitigen Eingang des DC/AC-Wandlers kann kontinuierlich oder abgestuft geregelt werden. Das Entsprechende gilt für den Spannungsabfall am Bauelement.

Um ein weiteres Verbrauchersystem mit kleinerer Last zu versorgen, ist es vorteilhaft, wenn die Schaltungsanordnung zwei weitere Batterieanschlüsse für eine zweite Batterie aufweist. In diesem Fall weist die Schaltungsordnung einen DC/DC-Wandler auf. Bei Anschluss der zweiten Batterie ist die zweite Batterie parallel zum ersten Eingang des DC/DC-Wandlers geschaltet. Der zweite Eingang des DC/DC-Wandlers ist parallel zum DC-seitigen Eingang des DC/AC-Wandlers geschaltet. Die Schaltungsanordnung oder das Bordnetz außerhalb der Schaltungsanordnung weist einen oder zwei weitere Anschlüsse auf, über den das weitere Verbrauchersystem parallel zum ersten Eingang des DC/DC-Wandlers schaltbar ist. Die Leerlaufspannung der zweiten Batterie ist niedriger als die Leerlaufspannung der ersten Batterie.

Der Energiewandler kann z. B. als Asynchron-, Synchron-, Reluktanz- oder Axialflussmaschine ausgestaltet sein.

Im folgenden wird ein Ausführungsbeispiel der Erfindung anhand der Figuren näher erläutert.
- Figur 1: zeigt das Schaltbild eines Bordnetzes mit einer ersten Batterie, einer zweiten Batterie, einem Energiewandler und einer Schaltungsanordnung mit einem Bauelement, Anschlüssen für ein Verbrauchersystem, einem Kondensator, einem DC/DC-Wandler, einem DC/AC-Wandler, einer Steuereinheit, Batterieanschlüsse für die erste Batterie und für die zweite Batterie und Anschlüssen für ein weiteres Verbrauchersystem.
- Figur 2: zeigt ein weiteres Bauelement bestehend aus einem Transistor und einem Relais.

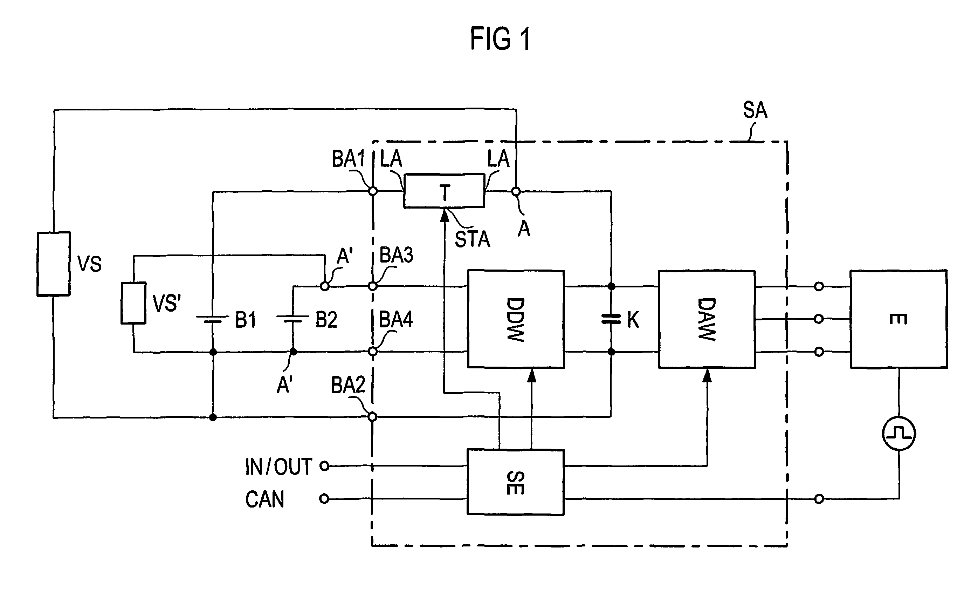

Im Ausführungsbeispiel ist ein Bordnetz mit einem integrierten Starter-Generator vorgesehen, das eine erste Batterie B1 mit einer Leerlaufspannung von 36 Volt und eine zweite Batterie B2 mit einer Leerlaufspannung von 12 Volt aufweist. Ferner weist der Starter-Generator einen als Asynchronmaschine ausgestalteten Energiewandler E auf (vgl. Figur 1).

Eine Schaltungsanordnung SA für den Starter-Generator weist zwei Batterieanschlüsse BA1, BA2 für die erste Batterie B1 auf. Ferner weist die Schaltungsanordnung SA zwei Batterieanschlüsse BA3, BA4 für die zweite Batterie B2 auf.

Die Schaltungsanordnung SA weist einen DC/AC-Wandler DAW auf, dessen AC-seitiger Eingang mit dem Energiewandler E verbunden ist. Der DC-seitige Eingang des DC/AC-Wandlers DAW ist parallel zu einem Kondensator K gestaltet.

Die Schaltungsanordnung SA weist Anschlüsse A, BA2 auf, über den ein Verbrauchersystem VS parallel zum DC-seitigen Eingang des DC/AC-Wandlers DAW verbindbar ist. Einer der Anschlüsse BA2 ist identisch mit einem der Batterieanschlüsse BA2 der ersten Batterie B1 und wird von der ersten Batterie B1 und dem Verbrauchersystem VS gemeinsam genutzt.

Ein als Transistor ausgestaltetes Bauelement T bildet mit der ersten Batterie B1 eine Reihenschaltung, die parallel zum DC-seitigen Eingang des DC/AC-Wandlers DAW geschaltet ist. Das Bauelement weist zwei Leistungsanschlüsse LA und einen Steueranschluss STA an der Gateelektrode des Transistors auf.

Das Bordnetz weist außerhalb der Schaltungsanordnung SA zwei weitere Anschlüsse A' auf, über den ein weiteres Verbrauchersystem VS' parallel zur zweiten Batterie B2 geschaltet ist. Die zweite Batterie B2 ist ferner parallel zu einem ersten Eingang eines DC/DC-Wandlers DDW der Schaltungsanordnung SA geschaltet. Der zweite Eingang des DC/DC-Wandlers DDW ist parallel zum Kondensator K geschaltet.

Die Schaltungsanordnung SA weist eine Steuereinheit SE auf, die mit der Gateelektrode des Bauelements T, mit dem DC/DC-Wandler DDW, mit dem DC/AC-Wandler DAW und mit dem Energiewandler E verbunden ist.

Wird der Starter-Generator nicht als Generator betrieben, so versorgt die erste Batterie B1 das Verbrauchersystem VS mit Energie und versorgt den DC/AC-Wandler DAW mit Energie. Zugleich versorgt die zweite Batterie B2 das weitere Verbrauchersystem VS' mit Energie und kann ebenfalls den DC/AC-Wandler DAW mit Energie versorgen. Dazu steuert die Steuereinheit den DC/DC-Wandler DDW derart an, dass die niedrige Spannung an der zweiten Batterie B2 in eine hohe, der Spannung der ersten Batterie B1 entsprechende Spannung umgewandelt wird. Ist der Ladezustand der ersten Batterie B1 gering, so kann die zweite Batterie B2 über den DC/DC-Wandler DDW die erste Batterie B1 laden. Ebenso kann die erste Batterie B1 über den DC/DC-Wandler DDW die zweite Batterie B2 laden, wenn deren Ladezustand gering ist. Damit die Spannung der ersten Batterie B1 optimal ausgenutzt werden kann, steuert die Steuereinheit das Bauelement T so an, dass der Transistor vollständig geöffnet ist. Dadurch weist das Bauelement einen minimalen elektrischen Widerstand auf, wodurch der Spannungsabfall am Bauelement sehr gering ist.

Im Generatorbetrieb des Starter-Generators übernimmt der Energiewandler E die Versorgung des Verbrauchersystems VS und des weiteren Verbrauchersystems VS'. Dies geschieht durch Umwandlung von durch den Energiewandler E erzeugte Spannung in eine Gleichspannung mittels des DC/AC-Wandlers DAW. Im Generatorbetrieb werden ferner die erste Batterie B1 und die zweite Batterie B2 geladen, wenn der Stromverbrauch des entsprechenden Verbrauchersystems VS, VS' weniger beträgt als der DC/AC-Wandler liefert. Die Arbeitsrichtung des DC/DC-Wandlers DDW ist jedoch auch im Generatorbetrieb beliebig.

Stellt die Steuereinheit SE fest, dass die Leistungsgrenze des Energiewandlers E erreicht ist aufgrund z. B. eines besonders hohen Leistungsbedarf des Verbrauchersystems VS oder aufgrund einer sehr hohen Drehzahl des Energiewandlers E, so wird der DC/AC-Wandler DAW so gesteuert, dass die Spannung an beiden Eingängen des DC/AC-Wandlers DAW entsprechend der benötigten Leistung erhöht wird. Die Erhöhung beträgt ca. 3 bis 6 Volt.

Um die erste Batterie B1 vor einer zu hohen Ladespannung zu schützen, steuert die Steuereinheit SE gleichzeitig das Bauelement T so an, dass ein ausreichend hoher Spannungsabfall am Bauelement entsteht. Der Spannungsabfall beträgt typischerweise 3 bis 6 Volt. Das Bauelement entkoppelt also die Spannung an der ersten Batterie B1 von der Spannung am DC-seitigen Eingang des DC/AC-Wandlers DAW. Dazu steuert die Steuereinheit SE das Bauelement T so an, dass an der ersten Batterie B1 unabhängig von der Spannung am DC-seitigen Eingang des DC-AC-Wandlers DAW im wesentlichen eine konstante Spannung anliegt, nämlich 42 Volt.

Die Steuereinheit SE steuert auch den DC/DC-Wandler DDW an, um die erhöhte Spannung korrekt in die für die zweite Batterie B2 erforderliche Spannung, z. B. 14 Volt, umzuwandeln.

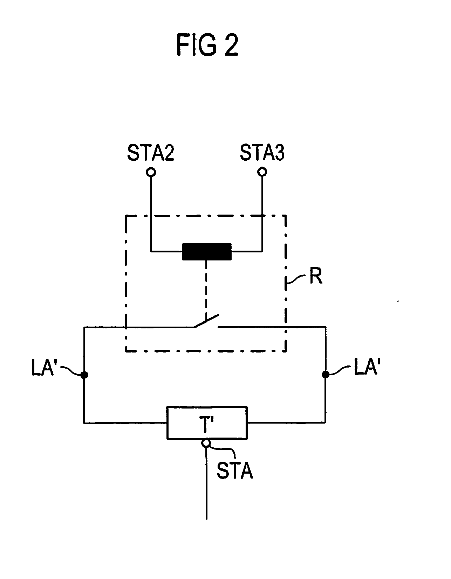

Statt als Transistor ausgestaltet zu sein, kann das Bauelement eine Parallelschaltung aus einem Transistor T' und einem Relais R sein (vgl. Figur 2). Auch ein solches Bauelement weist zwei Leistungsanschlüsse LA' auf. Ferner weist das Bauelement drei Steueranschlüsse STA1, STA2, STA3 auf. Der erste Steueranschluss STA1 ist mit der Gateelektrode des Transistors T' verbunden, während der zweite Steueranschluss STA2 und der dritte Steueranschluss STA3 mit der Spule des Relais R verbunden ist. Alle Steueranschlüsse STA1, STA2, STA3 sind mit der Steuereinheit verbunden.

## Patentansprüche

1. Schaltungsanordnung für einen Generator, insbesondere einen integrierten Starter-Generator
- mit zwei Batterieanschlüssen (BA1, BA2) für eine erste Batterie (B1),
- mit mindestens einem DC/AC-Wandler (DAW), dessen AC-seitiger Eingang an einen Energiewandler (E) anschließbar ist,
- mit einem Bauelement (T) zum Entkoppeln der Spannung an der ersten Batterie (B1) von der Spannung am DC-seitigen Eingang des DC/AC-Wandlers (DAW),
- mit einer Steuereinheit (SE) die mit einem Steueranschluss (STA) des Bauelements (T) verbunden ist,
- mit mindestens einem Anschluss (A), über den ein Verbrauchersystem (VS) unmittelbar parallel zum DC-seitigen Eingang des DC/AC-Wandlers (DAW) schaltbar ist,
**dadurch gekennzeichnet dass**,
- das Bauelement (T) genau zwei Leistungsanschlüsse (LA)und mindestens einen Steueranschluss (STA) aufweist und ein Spannungsabfall zwischen den Leistungsanschlüssen (LA) über den Steueranschluss (STA) kontinuierlich oder abgestuft variierbar ist,
- wobei bei Anschluss der ersten Batterie (B1) die erste Batterie (B1) und das Bauelement (T) über seine Leistungsanschlüsse (LA) eine Reihenschaltung bilden, die parallel zum DC-seitigen Eingang des DC/AC-Wandlers (DAW) und gleichzeitig parallel zu dem Verbrauchersystem (VS) geschaltet ist.

2. Schaltungsanordnung nach Anspruch 1,
- bei der das Bauelement (T) mindestens einen MOSFET-Transistor umfasst.

3. Schaltungsanordnung nach Anspruch 1,
- bei der das Bauelement eine Parallelschaltung aus einem Transistor (T') und einem Relais (R) ist,
- bei der das Bauelement drei Steueranschlüsse (STA1, STA2, STA3) aufweist, von denen der erste Steueranschluss (STA1) mit dem Transistor (T') und der zweite Steueranschluss (STA2) und der dritte Steueranschluss (STA3) mit dem Relais (R) verbunden sind.

4. Schaltungsanordnung nach einem der Ansprüche 1 bis 3,
- mit zwei weiteren Batterieanschlüssen (BA2, BA3) für eine zweite Batterie (B2),
- mit einem DC/DC-Wandler (DDW),
- bei der bei Anschluss der zweiten Batterie (B2) die zweite Batterie (B2) parallel zum ersten Eingang des DC/DC-Wandlers (DDW) geschaltet ist,
- bei der der zweite Eingang des DC/DC-Wandlers (DDW) zum DC-seitigen Eingang des DC/AC-Wandlers (DAW) parallel geschaltet ist.

5. Generator mit einer Schaltungsanordnung nach einem der Ansprüche 1 bis 4,
- der als integrierter Starter-Generator ausgestaltet ist.

6. Bordnetz mit einem Generator mit einer Schaltungsanordnung nach einem der Ansprüche 1 bis 4,
- mit der ersten Batterie (B1), die mit den zwei Batterieanschlüssen (BA1, BA2) verbunden ist,
- mit dem Energiewandler (E), der mit dem AC-seitigen Eingang des DC/AC-Wandlers (DAW) verbunden ist,
- der derart ausgelegt ist, dass die Spannung am DC-seitigen Eingang des DC/AC-Wandlers (DAW) zu keinem Zeitpunkt über einer vorgegebenen Spannung liegt.

7. Bordnetz nach Anspruch 6,
- bei dem der Energiewandler (E) als Asynchronmaschine ausgestaltet ist.

8. Bordnetz nach Anspruch 6 oder 7,
- mit der zweiten Batterie (B2), die mit den zwei weiteren Batterieanschlüssen (BA2, BA3)verbunden ist,
- wobei die Leerlaufspannung der zweiten Batterie (B2) niedriger ist als die Leerlaufspannung der ersten Batterie (B1).

9. Betriebsverfahren eines Bordnetzes nach einem der Ansprüche 6 bis 8,
- bei dem die Steuereinheit (SE) das Bauelement (T) so ansteuert, dass an der ersten Batterie (B1) unabhängig von der Spannung am DC-seitigen Eingang des DC/AC-Wandlers (DAW) im wesentlichen eine konstante Spannung anliegt.

## Claims

1. A circuit arrangement for a generator, particularly an integrated starter-generator,
- having two battery interfaces (BA1, BA2) for a first battery B1,
- having at least one DC/AC transformer (DAW), whose AC-side input can be connected to an energy converter (E),
- having a component (T) for isolating the voltage at the first battery (B1) from the voltage at the DC-side input of the DC/AC transformer (DAW),
- having a control unit (SE) which is connected to a control interface (STA) of the component (T),
- having at least one interface (A) via which a load system (VS) can be connected directly in parallel with the DC-side input of the DC/AC transformer (DAW),
**characterised in that**
- the component (T) includes precisely two power interfaces (LA) and at least one control interface (STA), and a voltage drop between the power interfaces (LA) can be varied continuously or incrementally via the control interface (STA),
- wherein, when the first battery (B1) is connected, a series circuit is formed by the first battery (B1) and the component (T) via its power interfaces (LA), said series circuit being connected in parallel with the DC-side input of the DC/AC transformer (DAW) and in parallel with the load system (VS) at the same time.

2. The circuit arrangement as claimed in claim 1,
- in which the component (T) includes at least one MOSFET transistor.

3. The circuit arrangement as claimed in claim 1,
- in which the component is a parallel circuit comprising a transistor (T') and a relay (R),
- in which the component has three control interfaces (STA1, STA2, STA3), of which the first control interface (STA1) is connected to the transistor (T') and the second control interface (STA2) and the third control interface (STA3) are connected to the relay (R).

4. The circuit arrangement as claimed in one of claims 1 to 3,
- having two further battery interfaces (BA2, BA3) for a second battery (B2),
- having a DC/DC transformer (DDW),
- in which, when the second battery (B2) in connected, the second battery (B2) is connected in parallel with the first input of the DC/DC transformer (DDW),
- in which the second input of the DC/DC transformer (DDW) is connected in parallel with the DC-side input of the DC/AC transformer (DAW).

5. A generator having a circuit arrangement as claimed in one of the claims 1 to 4,
- which is configured as an integrated starter-generator.

6. A vehicle electrical system which includes a generator having a circuit arrangement as claimed in one of the claims 1 to 4,
- having the first battery (B1) which is connected to the two battery interfaces (BA1, BA2),
- having the energy converter (E) which is connected to the AC-side input of the DC/AC transformer (DAW),
- which is designed in such a way that the voltage at the DC-side input of the DC/AC transformer (DAW) is not higher than a predefined voltage at any time.

7. The vehicle electrical system as claimed in claim 6,
- in which the energy converter (E) is configured as an asynchronous machine.

8. The vehicle electrical system as claimed in claim 6 or 7,
- having the second battery (B2) which is connected to the two further battery interfaces (BA2, BA3),
- wherein the open-circuit voltage of the second battery (B2) is lower than the open-circuit voltage of the first battery (B1).

9. An operating method for a vehicle electrical system as claimed in one of claims 6 to 8,
- in which the control unit (SE) controls the component (T) in such a way that a constant voltage is essentially present at the first battery (B1), irrespective of the voltage at the DC-side input of the DC/AC transformer (DAW).

## Revendications

1. Ensemble de circuits pour un générateur, en particulier un générateur-démarreur intégré, comprenant
- deux connexions de batterie (BA1, BA2) pour une première batterie (B1),
- au moins un convertisseur CC/CA (DAW) dont l'entrée de courant alternatif CA peut être raccordée à un convertisseur d'énergie (E),
- un composant (T) pour découpler la tension à la première batterie (B1) de la tension à l'entrée de courant continu du convertisseur CC/CA (DAW),
- une unité de commande (SE) qui est reliée à une borne de commande (STA) du composant (T),
- au moins une connexion (A) par laquelle un système de consommateurs (VS) peut être raccordé directement en parallèle à l'entrée de courant continu CC du convertisseur CC/SA (DAW),
**caractérisé en ce que**
- le composant (T) contient exactement deux connexions de puissance (LA) et au moins une connexion de commande (STA), et qu'une chute de tension entre les connexions de puissance (LA) peut être modifiée via la connexion de commande (STA) en continu ou de façon échelonnée,
- la première batterie (B1) et le composant (T) formant un circuit en série par ses connexions de puissance (LA) lorsque la première batterie (B1) est connectée, ce circuit en série étant relié en parallèle à l'entrée de courant continu CC du convertisseur CC/CA (DAW) et simultanément en parallèle au système de consommateurs (VS),

2. Ensemble de circuits selon la revendication 1,
- dans lequel le composant (T) comprend au moins un transistor MOSFET.

3. Ensemble de circuits selon la revendication 1,
- dans lequel le composant est un circuit en parallèle d'un transistor (T') et d'un relais (R), et
- dans lequel le composant comporte trois connexions de commande (STA1, STA2, STA3) dont la première (STA1) est branchée au transistor (T'), et la deuxième (STA2) et la troisième (STA3) sont reliées au relais (R).

4. Ensemble de circuits selon l'une des revendications 1 à 3, comprenant
- deux autres connexions de batterie (BA2, BA3) d'une deuxième batterie (B2),
- un convertisseur CC/CC (DDW),
- dans lequel la deuxième batterie (B2), lorsqu'elle est raccordée, est connectée en parallèle à la première entrée du convertisseur CC/CC (DDW), et
- dans lequel la deuxième entrée du convertisseur CC/CC (DDW) est connectée en parallèle à l'entrée de courant continu du convertisseur CC/CA (DAW).

5. Générateur, comportant un ensemble de circuits selon l'une des revendications 1 à 4,
- qui est configuré sous forme de générateur-démarreur intégré.

6. Réseau de bord, contenant un générateur équipé d'un ensemble de circuits selon l'une des revendications 1 à 4, comprenant
- la première batterie (B1) qui est reliée aux deux connexions de batterie (BA1, BA2),
- le convertisseur d'énergie (E) connecté à l'entrée de courant alternatif du convertisseur CC/CA (DAW),
- qui est réalisé de telle sorte que la tension à l'entrée de courant continu du convertisseur CC/CA (DAW) n'est à aucun moment au-dessus d'une tension prédéterminée.

7. Réseau de bord selon la revendication 6,
- dans lequel le convertisseur d'énergie (E) est réalisé sous forme de machine asynchrone.

8. Réseau de bord selon la revendication 6 ou 7,
- comprenant la deuxième batterie (B2) qui est reliée à deux autres connexions de batterie (BA2, BA3),
- la tension à vide de la deuxième batterie (B2) étant moins élevée que la tension à vide de la première batterie (B1).

9. Procédé d'exploitation d'un réseau de bord selon l'une des revendications 6 à 8,
- dans lequel l'unité de commande (SE) fait fonctionner le composant (T) de telle manière qu'une tension essentiellement constante est présente au niveau de la première batterie (B1) indépendamment de la tension à l'entrée de courant continu CC du convertisseur CC/CA (DAW) .
